# EUROPEAN PATENT SPECIFICATION

(11) **EP 0 795 219 B1**
(45) Date of publication and mention of the grant of the patent: **31.03.1999**
(21) Application number: 95939448.7
(22) Date of filing: 22.11.1995
(51) Int. Cl.: H02B 1/16, H02B 13/075, H01H 31/16, H01H 33/00

(54) **ELECTRIC SWITCHING DEVICE**
ELEKTRISCHE SCHALTVORRICHTUNG
DISPOSITIF DE COMMUTATION ELECTRIQUE

(30) Priority: 28.11.1994 SE 9404108
(43) Date of publication of application: 17.09.1997
(73) Proprietor: ASEA BROWN BOVERI AB, 721 83 Västeras (SE)
(72) Inventor: VALDEMARSSON, Stefan, S-725 97 Västeras (SE); BREDER, Henrik, S-723 47 Västeras (SE)
(86) International application number: SE9501389
(87) International publication number: WO9617420

(56) References cited:
- EP-A- 0 270 389
- EP-A- 0 515 009
- SE-B- 420 033

## Description

### TECHNICAL FIELD

The present invention relates to an electric switching device, a so-called high-speed circuit closer, for achieving a rapid mechanical and electrical short circuiting of a multi-phase network.

The electric switching device is preferably intended to be used as arc eliminator in cubicle-enclosed switchgear for low voltage and medium voltage, that is, in the voltage range of up to about 40 kV, but also other fields of use are feasible.

In short-circuit arcs very large amounts of energy are released in the form of heat and radiation. In indoor switchgear, with their relatively limited spaces, these amounts of energy give rise to pressure increases which may burst the enclosure unless the heated gases are given the possibility to flow out through relief openings. Further, the high arc temperatures cause conductor and enclosure material to melt and become evaporated. Burnable organic material may also be ignited when subjected to the high temperature and the intensive radiation of the arc.

### BACKGROUND ART

By using a so-called arc monitor, for example of the kind described in the ASEA pamphlet SK 66-4, published in 1985, the material damage may be reduced and the personal safety be increased in case of an arc fault. The arc monitor reacts to short-circuit arcs and instantaneously supplies a tripping impulse to a circuit breaker which disconnects the supply voltage. The circuit breakers which are usually used in switchgear of the above-mentioned kind, however, are not sufficiently fast to limit the pressure, the maximum of which normally occurs within 10-30 ms. It is, therefore, common for such switchgear to be provided with pressure-relief devices in the form of relief channels, automatically openable doors, etc. However, this causes the switchgear to become more expensive and to require larger space.

From, for example, DE-A-2623 816, it is previously known to use, in gas-insulated, metal-enclosed switchgear, a rapid grounding switch to extinguish a short-circuit arc between a high-voltage conductor and the grounded enclosure, in order thus to eliminate the risk of a dangerous overpressure building up. The described grounding switch is of single-phase design and is operated by a built-in explosive charge, the ignition of which is initiated by a sensor which is influenced by the arc. A disadvantage with such a grounding switch is that, after one single operation, it has to be totally overhauled or replaced.

For limiting the short-circuit current in a high-voltage network, it is previously known from SE-B-301 517 (& GB-A-1 121 078) to use a rapidly closing grounding switch, which is stated to have the ability to ground a high-voltage line within a time of 5 ms or less after the occurrence of the short-circuit current. This grounding switch is of single-phase design and is operated by compressed air of a high pressure, for example 30 bar. Such a design is not practicable in modern low- and medium-voltage switchgear.

It is previously known to use torsion rod springs as energy accumulator in operating devices for circuit breakers (see, e.g., DE-C-673 315 and SE-B-455 449 (& US-A-4 825 182)). One advantage of springs of this kind is that they make possible a rapid energy output, since the mass of a torsion rod is concentrated near the rotary axis, which causes the moment of inertia of the rod to be small. Hitherto known electric switching devices with torsion-type operating springs are of single-phase design, which means that, when being used in a three-phase network, three separate units are required. Because of the relatively large space requirement caused thereby, as well as the contact arrangement etc. of these electric switching devices, these switching devices cannot be used in switchgear of the above-mentioned type to bring about a rapid short-circuit of the three phase conductors to ground when an arc fault occurs.

### SUMMARY OF THE INVENTION

The present invention aims to provide an electric switching device, a so-called high-speed circuit closer, which is capable of rapidly short-circuiting a plurality of conductors, for example three phase conductors to ground. The high-speed circuit closer shall manage both high voltage and high current and shall be able to function several times. In addition, it shall be of a relatively simple and compact construction, which makes possible location in conventional air-insulated indoor switchgear. This is achieved according to the invention with an electric switching device with the characteristic features described in claim 1.

The rapidity of the circuit closer is achieved by triggering the required operating energy, by means of an electrically controlled latch, in a prestressed torsion spring to which radially extending short-circuiting contact arms are attached, either directly or via a current-carrying tube attached to the spring. In the open contact position, the contact arms are located mid-way between fixed contacts which are intended to be connected to the phase conductors which are to be electrically short-circuited.

The fixed contacts are suitably provided with self-resilient contact elements or contact elements biassed by springs, which form wedge-shaped grooves into which the short-circuiting contact arms slide during a contact closing operation.

Both the fixed and the movable contacts may be provided with shields for electric field equalization such that the insulation distances between the contacts in the open position may be reduced. For the same reason, the contact arrangement may be placed in a cylindrical cavity with a gaseous insulating medium.

The high-speed circuit closer can be restored by tensioning the torsion spring with, for example, a torque wrench or a motor drive.

By a suitable improvement of the invention, the ability of the circuit closer to carry large currents may be increased without reducing its rapidity. This is achieved by using two coaxially arranged torsion springs in the form of a pin in a tube where one of the springs is prestressed with, for example, a torque wrench or a motor drive. The other spring is prestressed by means of a lug by the first-mentioned spring such that both springs in prestressed position are in mechanical contact with each other. Radially extending short-circuiting contact arms are attached to the two springs, either directly in the springs or via current-carrying tubes attached to the springs. By providing that torsion spring which tensions the other one with relatively light contact arms, and the latter with heavier contact arms with a higher current-carrying capability, the lighter contacts will first reach the fixed contacts when the circuit closer is tripped with an electrically controlled latch. This design makes it possible to choose rapidity and current capability independently of each other within certain limits, by dimensioning the springs with the associated contact arms separately.

A high-speed circuit closer according to the invention is especially suitable for use as arc eliminator in an air-insulated indoor switchgear, since it may be designed with such a short closing time that the overpressure generated in case of an arc fault is limited to a level harmless to the enclosure. In this way, the switchgear need not be provided with any pressure-relief devices.

### BRIEF DESCRIPTION OF THE DRAWINGS

The invention will be explained in greater detail by description of embodiments with reference to the accompanying drawings, wherein
- Figure 1: schematically shows, in an end view, the contact system of a first embodiment of a high-speed circuit closer, designed according to the invention, in the open position,
- Figure 2: schematically shows the high-speed circuit closer according to Figure 1 in an axial section, the upper and lower parts of the contact system, respectively, being shown in the open and closed positions, respectively,
- Figure 3: shows in the same way as in Figure 2 a second embodiment of a high-speed circuit closer designed according to the invention, and
- Figures 4 and 5: show in the same way as in Figures 1 and 2 a third embodiment of such a high-speed circuit closer.

### DESCRIPTION OF THE PREFERRED EMBODIMENTS

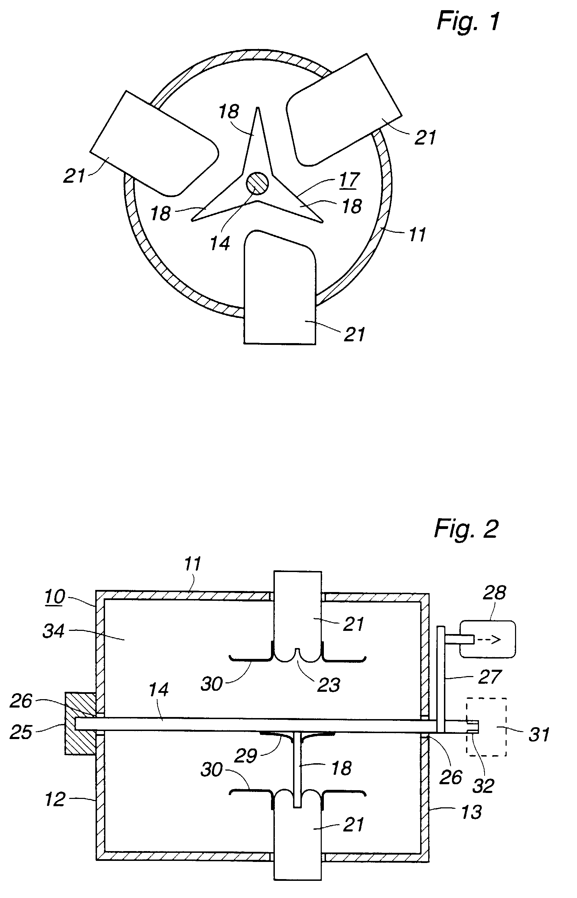

The high-speed circuit closer shown in Figures 1 and 2 has an apparatus housing 10, intended for fixed mounting, in the form of a circularly cylindrical hollow cylinder with a cylinder wall 11 and end members 12, 13. The apparatus housing may be made of an electrically insulating material. Axially through the housing 10 there extends a rod-shaped torsion spring 14, to which a star-shaped contact plate 17 is attached. The contact plate 17 exhibits three radially extending short-circuiting contact arms 18, which are angularly displaced 120° in relation to each other. In the open contact position (Figure 1), the contact arms are located midway between fixed contacts 21, which extend through the cylinder wall 11 of the apparatus housing and are supported thereby. The fixed contacts 21 are each intended to be connected to a separate phase conductor in the three-phase network which is to be short-circuited.

The fixed contact are provided with resilient contact tongues, forming between them wedge-shaped grooves 23, into which the short-circuiting contact arms 18 slide during a contact-closing operation (Figure 2).

The torsion rod spring 14 is attached at one end, for example by splines, to a holder 25 secured to the apparatus housing 10. At its other end, the torsion rod spring passes through a bearing 26 arranged in the end member 13 of the apparatus housing and is provided with a radially directed tension arm 27 which cooperates with an electrically controlled latching device 28.

During normal operation, the high-speed circuit closer is in the open position (Figure 1), and the latching device 28 maintains the torsion rod spring in tensioned state. If the latching device 28 receives a tripping signal, for example in the event of a fault arc occurring in the switchgear in which the high-speed circuit closer is installed, the operating energy in the prestressed torsion rod spring is released, whereby the short-circuiting contacts arms 18 are moved into the contact slots 23 of the fixed contacts in a very short time (the order of magnitude of 1 ms).

Adjacent to both the fixed and the movable contacts 21 and 18, respectively, shields 30 and 29, respectively, are arranged for electric field equalization, such that the insulation distances between the contacts in the open position may be reduced. For the same reason, the apparatus housing 10 is filled with insulating gas, for example SF₆.

After a short-circuit operation, the high-speed circuit closer is restored by tensioning the torsion rod spring, for example with a torque wrench or a motor drive 31, which is then connected to the projecting shaft end of the torsion rod spring.

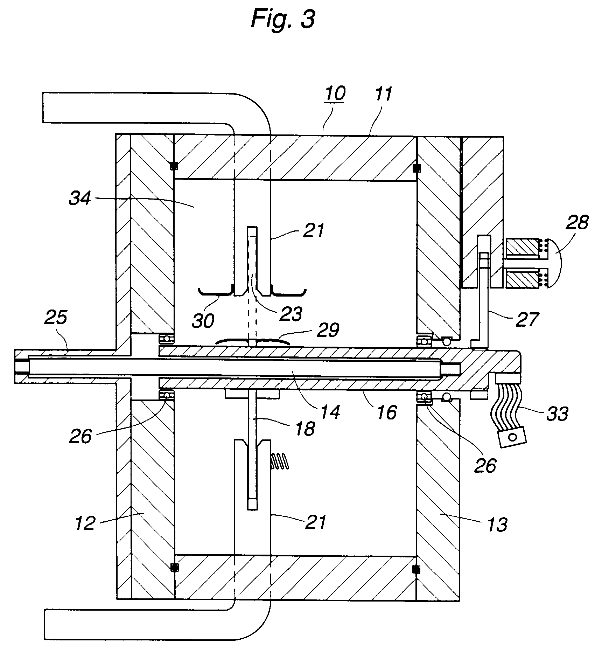

In the embodiment of the high-speed circuit closer shown in Figure 3, the contact plate 17 is attached to a current-carrying tube 16, which coaxially surrounds the torsion rod spring 14 and, for example, is attached by means of splines to the spring at the end thereof which is connectible to the tensioning device 31. The tube is rotatably journalled in the end members 12, 13 of the apparatus housing and is secured to the tension arm 27. A flexible conductor 33 for neutral ground is connected to the tube 16.

In the embodiment according to Figure 3, the holder 25 for fixing one end of the spring 14 to the apparatus housing is designed in such a way that the length of the spring may be considerably greater than the axial length of the cylindrical, gas-filled cavity 34 in which the contact system is placed.

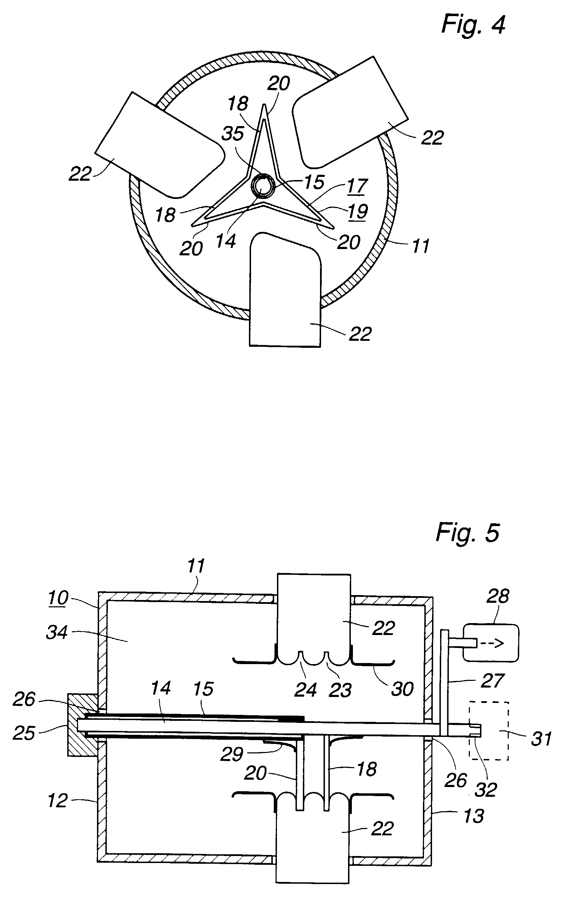

The high-speed circuit closer according to Figures 4 and 5 is provided with two coaxially arranged torsion springs, namely, one inner rod-shaped spring 14 and one outer tubular spring 15, both of which, at one end of the respective spring, being attached to the holder 25 secured to the apparatus housing 10. The inner spring 14 is adapted to be prestressed with, for example, a torque wrench or a motor drive 31. The outer spring 15 is prestressed by the inner spring 14, which for this purpose is provided with a tension lug 35. The two springs will therefore, in prestressed condition, be in mechanical contact with each other. Star-shaped contact plates 17 and 19, respectively, which exhibit contact arms 18 and 20, respectively, are attached to the two springs 14 and 15. The contact plates 17, 19 need not necessarily be attached directly to the springs but may, instead, be attached to current-carrying tubes, which in turn are secured to the respective spring in a manner similar to that shown in Figure 3. In the open contact position, the contact arms 18, 20 are located midway between fixed double contacts 22 (Figure 4), which are intended to be connected to the phase conductors in the multi-phase network to be short-circuited. The fixed contacts are provided with resilient contact tongues, which between themselves form wedge-shaped grooves 23 and 24, into which the short-circuiting contact arms 18 and 20, respectively, of the two torsion springs slide during a contact-closing operation (Figure 5).

By providing that torsion spring 14 which tensions the other spring 15 with relatively light contact arms 18 and the latter with heavier contact arms 20 with a higher current-carrying capability, the lighter contact arms will reach the fixed contacts earlier than the heavier contact arms when the circuit closer is tripped by means of the electrically controlled latching device 28. This embodiment makes it possible to choose rapidity and current capability independently of each other within certain limits by dimensioning the springs with the associated contact arms separately.

## Claims

1. An electric switching device for achieving a rapid short circuiting of a multi-phase network, **characterized** in that the electric switching device comprises
- a preferably circularly cylindrical apparatus housing (10),
- a shaft extending axially through the apparatus housing and comprising a rod-shaped torsion spring (14), one end of which being attached to the apparatus housing and the other end being adapted to be connected to a tensioning device (31),
- a number of fixed contacts (21) corresponding to the number of conductors in the multi-phase network, said fixed contacts being arranged in a normal plane to the shaft and being angularly displaced with evenly distributed distances around the shaft and extending through the wall (11) of the apparatus housing for connection to said conductors,
- a number of contact arms (18), supported by the shaft, corresponding to the number of fixed contacts (21), said contact arms being electrically connected to each other and located in said normal plane and radially outwardly directed such that, in the open contact position, they are located substantially midway between the fixed contacts (21), and
- an electrically controlled latching device (28) for maintaining the electric switching device in the open position during normal operation, with the torsion spring (14) tensioned.

2. An electric switching device according to claim 1, **characterized** in that the shaft comprises a tube (16) arranged around the spring (14) and attached to the spring at said second end, the contact arms (18) being fixed to the tube.

3. An electric switching device according to any of the preceding claims, **characterized** in that the contact arms (18) form a star-shaped contact plate (17).

4. An electric switching device according to any of the preceding claims, **characterized** in that the shaft comprises two coaxially arranged torsion springs (14, 15), which are fixedly attached to one end of the shaft and each of which supports a set (17, 19) of said contact arms (18, 20), that the first spring (14) is adapted to be prestressed by means of said prestress device (31), whereas the second spring (15) is adapted to be prestressed by the first spring (14) via a single-acting coupling (35), and that the set (17) of the contact arms (18) which is supported by the first spring (14) is considerably lighter than the set (19) which is supported by the second spring (15).

5. An electric switching device according to claim 4, **characterized** in that at least one of said torsion springs (14, 15) is surrounded by a current-carrying tube which is attached to the respective spring and to which the contact arms (18 and 20, respectively) of the respective spring are attached.

6. An electric switching device according to any of the preceding claims, **characterized** in that the fixed contacts exhibit resilient or spring-biassed contact elements, which form wedge-shaped grooves (23, 24) into which the short-circuiting contact arms (18, 20) slide during a contact-closing operation.

7. An electric switching device according to any of the preceding claims, **characterized** in that shields (30, 29) for electric field equalization are arranged adjacent to the fixed (21, 22) and movable contacts (18, 20).

8. An electric switching device according to any of the preceding claims, **characterized** in that the apparatus housing (10) contains insulating gas, for example SF₆.

9. An electric switching device according to any of the preceding claims, **characterized** in that the shaft (14, 16) is provided with connection means for a grounding conductor (33).

10. Use of an electric switching device according to any of the preceding claims as arc eliminator in switchgear.

## Patentansprüche

1. Elektrische Schaltvorrichtung zum Bilden eines schnellen Kurzschlußes eines mehrphasigen Netzes, **dadurch gekennzeichnet,** daß die elektrische Schaltvorrichtung umfaßt
- ein vorzugsweise kreisrund zylindrisches Apparatgehäuse (10),
- eine durch das Apparatgehäuse achsial verlaufende Welle, die eine stangenförmige Torsionsfeder (14) aufweust, deren eines Ende am Apparatgehäuse befestigt ist und deren anderes Ende vorgesehen ist an eine Vorspannungsvorrichtung (31) angeschlossen zu werden,
- eine Anzahl fester Kontakte (21), die der Anzahl Leiter im mehrphasigen Netz entsprechen, wobei die festen Kontakte in einer zur Welle winkelrechten Ebene und in regelmäßigen Abständen um die Welle herum winkelverschoben liegen und die Wand (11) des Apparatgehäuses zum Anschluß an diese Leitungen durchlaufen,
- eine Anzahl von der Welle getragener Kontaktarme (18), die der Anzahl fester Kontakte (21) entsprechen, wobei die Kontaktarme elektrisch miteinander verbunden sind und in dieser winkelrechten Ebene liegen und radial nach außen gerichtet sind, sodaß sie in ausgeschalteter Lage im Wesentlichen in der Mitte zwischen den festen Kontakten (21) liegen, und
- eine elektrisch gesteuerte Sperrvorrichtung (28) zum Festhalten der elektrischen Schaltvorrichtung in ausgeschalteter Lage während gewöhnlichem Betrieb mit der Torsionsfeder (14) vorgespannt.

2. Elektrische Schaltvorrichtung gemäß Patentanspruch 1, **dadurch gekennzeichnet,** daß die Welle ein Rohr (16) umfaßt, das um die Feder (14 herum angeordnet und an der Feder an diesem zweiten Ende befestigt ist, wobei die Kontaktarme (18) am Rohr festgemacht sind.

3. Elektrische Schaltvorrichtung gemäß irgendeinem der vorhergehenden Patentansprüche, **dadurch gekennzeichnet,** daß die Kontaktarme (18) eine sternförmige Kontaktplatte (17) bilden.

4. Elektrische Schaltvorrichtung gemäß irgendeinem der vorhergehenden Patentansprüche, **dadurch gekennzeichnet,** daß die Welle zwei koachsial angeordnete Torsionsfedern (14, 15) umfaßt, die fest am einen Ende der Welle befestigt sind und jeweils eine Gruppe (17, 19) dieser Kontaktarme (18, 20) stützt, daß die erste Feder (14) vorgesehen ist mit Hilfe dieser Vorspannvorrichtung (31) vorgespannt zu werden, wogegen die zweite Feder (15) vorgesehen ist von der ersten Feder über einen einfachwirkenden Anschluß vorgespannt zu werden und daß die Gruppe (17) von der ersten Feder (14) gestützter Kontaktarme (18) bedeutend leichter ist als die Gruppe (19), die von der zweiten Feder (15) gestützt werden.

5. Elektrische Schaltvorrichtung gemäß Patentanspruch 4, **dadurch gekennzeichnet,** daß mindestens eine dieser Torsionsfedern (14, 15) von einem stromführenden Rohr umgeben ist, das an der entsprechenden Feder befestigt ist und an dem die Kontaktarme (18 bzw. 20) der entssprechenden Feder festgemacht sind.

6. Elektrische Schaltvorrichtung gemäß irgendeinem der vorhergehenden Patentansprüche, **dadurch gekennzeichnet,** daß die festen Kontakte federnde oder federbelastete Kontaktelmeente aufweisen, die kantförmige Nuten (23, 24) bilden, in welche die Kurzschluß-Kontaktarme (18, 20) während eines Kontaktbildungsvorgangs hineingleiten.

7. Elektrische Schaltvorrichtung gemäß irgendeinem der vorhergehenden Patentansprüche, **dadurch gekennzeichnet,** daß die Schutzschirme (30, 29) für den elektrischen Feldaussgleich nahe den festen (21, 22) und den beweglichen Kontakten (18, 20) angeordnet sind.

8. Elektrische Schaltvorrichtung gemäß irgendeinem der vorhergehenden Patentansprüche, **dadurch gekennzeichnet,** daß das Apparatgehäuse (10) isolierendes Gas, beispielsweise SF₆, enthält.

9. Elektrische Schaltvorrichtung gemäß irgendeinem der vorhergehenden Patentansprüche, **dadurch gekennzeichnet,** daß die Welle (14, 16) mit Anschlußelementen für einen Erdleiter (33) versehen ist.

10. Verwendung einer elektrischen Schaltvorrichtung gemäß irgendeinem der vorhergehenden Patentansprüche als Bogenlöscher in Schaltgeräten.

## Revendications

1. Dispositif de commutation électrique pour obtenir une mise en court-circuit rapide d'un réseau multiphase, caractérisé en ce que le dispositif de commutation électrique comporte
- un logement (10) de dispositif cylindrique, de préférence circulaire,
- un arbre s'étendant axialement à travers le logement de dispositif et comportant un ressort (14) de torsion en forme de tige, dont une extrémité est fixée au logement de dispositif et dont l'autre extrémité est conçue pour être connectée à un dispositif (31) de mise sous tension,
- un certain nombre de contacts (21) fixes correspondant au nombre de conducteurs dans le réseau multiphase, les contacts fixes étant agencés dans un plan normal à l'arbre et étant déplacés angulairement avec des distances réparties de manière uniforme autour de l'arbre et s'étendant à travers la paroi (11) du logement de dispositif pour la connexion aux conducteurs,
- un certain nombre de bras (18) de contact, supportés par l'arbre, correspondant au nombre de contacts (21) fixes, les bras de contact étant connectés électriquement les uns aux autres et se trouvant dans un plan normal et radialement vers l'extérieur dirigé de sorte que, dans la position de contact ouverte, ils se trouvent sensiblement à mi-distance entre les contacts (21) fixes, et
- un dispositif (28) de verrouillage commandé électriquement pour maintenir le dispositif de commutation électrique dans la position ouverte pendant le fonctionnement normal, avec le ressort (14) de torsion sous tension.

2. Dispositif de commutation électrique suivant la revendication 1, caractérisé en ce que l'arbre comprend un tube (16) agencé autour du ressort (14) et fixé au ressort à la seconde extrémité, les bras (18) de contact étant fixés au tube.

3. Dispositif de commutation électrique suivant l'une quelconque des revendications précédentes, caractérisé en ce que les bras (18) de contact forment une plaque (17) de contact en forme d'étoile.

4. Dispositif de commutation électrique suivant l'une quelconque des revendications précédentes, caractérisé en ce que l'arbre comprend deux ressorts (14, 15) de torsion agencés coaxialement qui sont fixés de manière fixe à une extrémité de l'arbre et qui chacun supporte un ensemble (17, 19) de bras (18, 20) de contact, en ce que le premier ressort (14) est conçu pour être précontraint au moyen du dispositif (31) de précontrainte, tandis que le second ressort (15) est conçu pour être précontraint par le premier ressort (14), par l'intermédiaire d'un dispositif (35) de couplage à action unique, et en ce que l'ensemble (17) des bras (18) de contact qui est supporté par le premier ressort (14) est considérablement plus léger que l'ensemble (19) qui est supporté par le second ressort (15).

5. Dispositif de commutation électrique suivant la revendication 4, caractérisé en ce qu'au moins l'un des ressorts (14, 15) de torsion est entouré par un tube transporteur de courant qui est fixé au ressort respectif et auquel les bras (18 et 20 respectivement) de contact du ressort respectif sont fixés.

6. Dispositif de commutation électrique suivant l'une quelconque des revendication précédentes, caractérisé en ce que les contacts fixes présentent des éléments de contact sollicités par ressorts ou élastiques qui forment des rainures (23, 24) en forme de coin, dans lesquelles les bras (18, 20) de contact de mise en court circuit coulissent pendant une opération de fermeture de contact.

7. Dispositif de commutation électrique suivant l'une quelconque des revendications précédentes, caractérisé en ce que des écrans (30, 29) pour une égalisation du champ électrique sont agencés adjacents aux contacts (18, 20) mobiles et aux contacts (21, 22) fixes.

8. Dispositif de commutation électrique suivant l'une quelconque des revendications précédentes, caractérisé en ce que le logement (10) de dispositif contient un gaz isolant, par exemple du SF6.

9. Dispositif de commutation électrique suivant l'une quelconque des revendications précédentes, caractérisé en ce que l'arbre (14, 16) est muni de moyens de connexion pour un conducteur (33) de mise à la terre.

10. Utilisation d'un dispositif de commutation électrique suivant l'une quelconque des revendications précédentes en tant qu'éliminateur d'arcs dans un appareillage électrique.
